# EUROPEAN PATENT SPECIFICATION

(11) **EP 2 935 110 B1**
(45) Date of publication and mention of the grant of the patent: **04.10.2017**
(21) Application number: 13812439.1
(22) Date of filing: 12.12.2013
(51) Int. Cl.: C01C 3/02

(54) **REDUCTION OF ORGANONITRILE IMPURITY LEVELS IN HCN FROM AN OXYGEN ANDRUSSOW PROCESS**
REDUKTION VON ORGANONITRILVERUNREINIGUNGEN IN HCN AUS EINEM SAUERSTOFF-ANDRUSSOW-VERFAHREN
RÉDUCTION DES NIVEAUX D'IMPURETÉS DE TYPE ORGANONITRILE DANS LE HCN PRODUIT PAR UN PROCÉDÉ D'ANDRUSSOW À L'OXYGÈNE

(30) Priority: 18.12.2012 US 201261738770 P
(43) Date of publication of application: 28.10.2015
(73) Proprietor: Invista Technologies S.à.r.l., 9000 St. Gallen (CH)
(72) Inventor: FORSYTH, Stewart, Wilmington, DE 19808 (US); LIU, Aiguo, Elk Grove Village, IL 60007 (US); RENNER, Martin, J., Hallettsville, TX 77964 (US); STAHLMAN, Brent, J., Victoria, TX 77901 (US)
(74) Representative: Carpmaels & Ransford LLP
(86) International application number: PCT/US2013/074699
(87) International publication number: WO 2014/099613

(56) References cited:
- GB-A- 723 081
- US-A1- 2005 047 988
- US-B2- 6 979 432
- MAXWELL ET AL: "Assuring process safety in the transfer of hydrogen cyanide manufacturing technology", JOURNAL OF HAZARDOUS MATERIALS, ELSEVIER, AMSTERDAM, NL, vol. 142, no. 3, 24 March 2007 (2007-03-24), pages 677-684, XP022001004, ISSN: 0304-3894, DOI: 10.1016/J.JHAZMAT.2006.06.071

## Description

### TECHNICAL FIELD

The present disclosure is directed to feed purification for the Andrussow process for the production of hydrogen cyanide (HCN) from methane, ammonia, and oxygen.

### BACKGROUND

The Andrussow process is used for gas phase production of hydrogen cyanide (HCN) from methane, ammonia, and oxygen over a platinum catalyst. Filtered ammonia, natural gas and oxygen, are fed into a reactor and heated in the presence of a platinum catalyst to temperatures in the range of 800-2500°C. Typically, the methane is supplied from natural gas, which can be further purified; C₂, C₃, and higher hydrocarbons (e.g., ethane, ethene, propane, propene, cyclopropane, butane, butene, isobutane, etc., collectively termed C₂+ hydrocarbons) can be present in natural gas. While air can be used as a source of oxygen, the reaction can also be carried out using undiluted oxygen or oxygen-enriched air (i.e., an oxygen Andrussow process). The reactor off-gas product stream containing HCN and un-reacted ammonia is quenched in a waste heat boiler to temperatures in the range of about 100-400°C. The cooled reactor off-gas is sent through an ammonia removal process wherein the ammonia is contacted with an acid in water to form the non-volatile ammonium salt of the acid. This is accomplished by contacting the cooled off-gas with an ammonium phosphate solution, phosphoric acid or sulfuric acid to remove the ammonia. From the ammonia absorber the product off-gas is sent through the HCN absorber where cold water is added to entrain the HCN. The HCN-water mixture is then sent to a hydrogen cyanide stripper where the HCN and some water is removed from non-volatile waste. The HCN-water mixture can then be further refined to provide substantially pure hydrogen cyanide, which can be stored in tanks or directly used as a feedstock. HCN product storage in tanks can generate sediments or sludges. Polymerization of HCN can occur in the presence of contaminants. Polymers of hydrogen cyanide can be intractable solids and tars, prone to foul surfaces of equipment that come in contact with the hydrogen cyanide product stream.

It is desirable to obtain hydrogen cyanide in pure form, not only to avoid incurring further purification costs and reduce equipment downtime for cleaning, but also because product contaminants can induce hydrogen cyanide polymerization. Among contaminants observed in the oxygen Andrussow process are organonitrile compounds, mainly acetonitrile, acrylonitrile, and propionitrile, which can end up in the HCN stripper or enricher columns. When this occurs, the columns must periodically be purged, otherwise column performance deteriorates and the possibility for HCN polymerization increases.

Various aspects of HCN production are described in the following articles: Eric. L. Crump, U.S. Environmental Protection Agency, Office of Air Quality Planning and Standards, *Economic Impact Analysis For the Proposed Cyanide Manufacturing NESHAP* (May 2000), *available online at http:*//*nepis.epa.gov*/*Exe*/*ZyPDF.cgi?Dockey=P100AHG1.PDF,* is directed toward the manufacture, end uses, and economic impacts of HCN; N.V. Trusov, Effect of Sulfur Compounds and Higher Homologues of Methane on Hydrogen Cyanide Production by the Andrussow Method, Rus. J. of Applied Chemistry, Vol. 74, No. 10, pp. 1693-97 (2001), is directed toward the effects of unavoidable components of natural gas, such as sulfur and higher homologues of methane, on the production of HCN by the Andrussow process; Clean Development Mechanism (CDM) Executive Board, United Nations Framework Convention on Climate Change (UNFCCC), *Clean Development Mechanism Project Design Document Form (CDMPDD),* Ver. 3, (Jul. 28, 2006), *available online at http:*//*cdm.unfccc.int*/*Reference*/*PDDs_Forms*/*PDDs*/*PDD_form04_v03_2.pdf,* is directed toward the production of HCN by the Andrussow process; and Gary R. Maxwell et al., Assuring process safety in the transfer of hydrogen cyanide manufacturing technology, J. of Hazardous Materials, Vol. 142, pp. 677-84 (2007), is directed toward the safe production of HCN.

### SUMMARY

The present invention is directed to methods which can reduce the levels of organonitrile impurities in hydrogen cyanide streams obtained from an oxygen Andrussow process.

In the production of hydrogen cyanide using an oxygen Andrussow process, e.g., a process using substantially pure oxygen rather than ambient air, use of hydrocarbon feedstocks containing C₂+ hydrocarbons in addition to methane can cause the formation of undesired impurities. Impurities generated from higher hydrocarbons such as ethane, ethene, propane, and propene can include organic nitriles such as acetonitrile, propionitrile, acrylonitrile, and the like. These nitrile impurities can themselves polymerize and react further, as well as induce polymerization of hydrogen cyanide. The formation of impurities can result in added costs due to additional purification steps required and due to equipment maintenance downtime for cleaning, and in reduced yields of the HCN product.

The invention can provide a method of reducing the levels of organonitrile impurities in hydrogen cyanide produced in an oxygen Andrussow process, comprising reducing levels of feedstock hydrocarbons other than methane, such as in a natural gas feedstock used for the process.

In one aspect, the present invention provides a method of HCN production in an oxygen Andrussow process by Andrussow ammoxidation of an alkane mixture with ammonia and an oxygen containing feed stream having about at least 26 mol% oxygen, in the presence of a platinum catalyst, comprising: use of an alkane mixture comprising methane of at least 99 wt% purity.

The present invention also provides a method of HCN production in an oxygen Andrussow process wherein the product HCN comprises as an impurity less than 2 wt%, or less than 1 wt%, or less than 0.1 wt%, of one or more organonitrile impurities, the method comprising: contacting ammonia, an oxygen containing feed stream having about at least 26 mol% oxygen, and an alkane mixture in the presence of a platinum catalyst, under conditions suitable to carry out an Andrussow ammoxidation reaction, wherein the alkane mixture comprises less than 2 wt%, of alkanes or their analogous alkenes, other than methane.

The HCN product contains a lesser content of the one or more organonitrile impurities than does an HCN product obtained when an alkane source containing a higher content of ethane, propane, or their alkene analogs thereof, or a mixture thereof, undergoes a comparable ammoxidation reaction.

The terms "alkene analog thereof", or an "analogous alkene", as used herein, refer to ethene (ethylene) with respect to ethane, and to propene (propylene) with respect to propane.

For example, by practice of a method of the invention, buildup of acrylonitrile and polyacrylonitrile in process equipment can by markedly reduced. When acrylonitrile levels build up in various portions of the continuous process stream, e.g., in the HCN stripper and HCN enricher fractionating columns, polymerization can occur, which fouls surfaces, blocks lines, and requires frequent and expensive downtime to clean. The blocking or plugging of lines by the polymers can also present a hazard to equipment and surroundings, as overpressures (e.g., of HCN in gaseous form) can develop, which can result in blowouts of gaskets and the like, and release of HCN into the environment surrounding the plugged equipment.

By practice of a method of the invention, it has been unexpectedly discovered that the overall rate of the process can be increased by up to 50%, resulting in greater product output per hour of reactor time. The rate of conversion of the ammonia/hydrocarbon/oxygen mixture to HCN has unexpectedly been found to increase when methane of greater than 98 wt%, 99 wt%, or 99.9 wt%, is used in the oxygen Andrussow process.

In the Andrussow process, the primary reactor output includes hydrogen cyanide, unreacted ammonia, carbon dioxide, and reaction impurities such as organonitriles (if any) including acrylonitrile. In an oxygen Andrussow process, as described below, an increasing oxygen content in enriched air has been found to bring about of variety of effects, which are described in greater detail below. Notably, an increasing oxygen content has surprisingly been found to result in an increased output of impurity organonitriles, such as acrylonitrile, when methane of a purity of less than 98 wt%, 99 wt%, or 99.9 wt%, (e.g., a methane purity of 95 wt%), is used.

In the Andrussow process, regardless of the oxygen content of the oxidizing gas feed, the reactants form product gases while in contact with the catalyst in the reaction zone. The primary reactor (HCN synthesis train) output includes primarily HCN, unreacted ammonia, and various impurities, which can vary depending upon reaction conditions. Minimization of certain of these impurities under conditions of oxygen content in the oxidizer gas greater than the oxygen content of air, are disclosed and claimed herein. The inventors herein have surprisingly discovered that use of a higher oxygen content in the Andrussow oxidizer gas feed produces a number of conditions and results that are not observed in an air Andrussow process, i.e., a process using an oxidizer gas of about 21 mol% oxygen.

The product gas containing HCN is then cooled and the ammonia component is scrubbed with acid. The resulting composition, including HCN, water, and impurities, is then transferred to a reaction train for refining the HCN, notably by distillative processes, resulting in removal of HCN from the water by fractionation, e.g., under partial vacuum or elevated pressure at temperatures above room temperature. The more volatile HCN distills in significantly purified form. In the fractionator bottoms, impurities less volatile than HCN can build up in the water phase from which the HCN has been stripped.

When acrylonitrile or other unsaturated organonitriles are among the impurities, their concentration in the aqueous fractionator bottoms can increase to levels wherein phase separation from the aqueous medium can start to occur. Particularly when the acrylonitrile is present as phase-separated enrichments, polymerization can and does occur more readily. The polyacrylonitrile polymerization products, tars and solids, can coat surfaces and can form particulates. These accumulations of polymers can also serve as sites to initiate the polymerization of hydrogen cyanide itself, which is present at high concentrations. Once HCN polymerization is initiated, larger amounts of interfering solids and tars can be produced.

When solids and tars such as polyacrylonitrile and polymerized hydrogen cyanide build up, equipment becomes fouled and must be taken offline for cleaning. While process equipment can be added in an attempt to ameliorate this, such as a purge line or a side draw, the buildup of solids is problematic. For example, process equipment used in practicing a method of the invention employing methane of purity 98 wt%, 99 wt%, or 99.9 wt%, can be used for several years without a need for shutdown to remove polymeric accumulations. However, it has been unexpectedly discovered by the inventors herein that when methane of lower purity is used as a reactant in the primary Andrussow reaction, equipment such as the HCN stripper and enricher columns in the HCN refining train must be taken offline as frequently as every 2-3 months to remove the unwanted buildup.

### BRIEF DESCRIPTION OF THE FIGURE

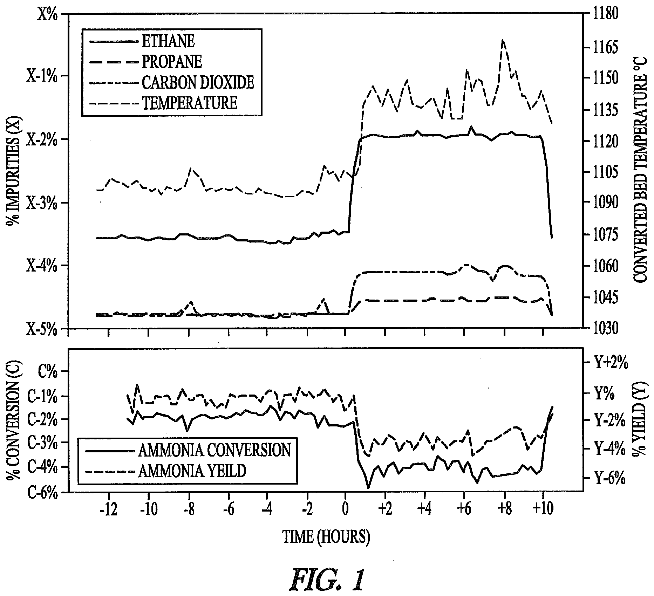

Figure 1 is a graph over time showing the effect of hydrocarbon feedstock composition with respect to C₂+ hydrocarbons on process variables including temperature and yield.

### DETAILED DESCRIPTION

The synthesis of hydrogen cyanide by the Andrussow method (see, for example, Ullmann's Encyclopedia of Industrial Chemistry, Volume 8, VCH Verlagsgesellschaft, Weinheim, 1987, pp. 161-162) can be carried out in the vapor phase over a catalyst that comprises platinum or platinum alloys, or other metals. Catalysts suitable for carrying out the Andrussow process were discovered and described in the original Andrussow patent, published as U.S. Pat. No. 1,934,838, and elsewhere. In Andrussow's original work, he disclosed that catalysts can be chosen from oxidation catalysts that are infusible (solid) at the working temperature of around 1000°C; he included platinum, iridium, rhodium, palladium, osmium, gold or silver as catalytically active metals either in pure form or as alloys. He also noted that certain base metals, such as rare earth metals, thorium, uranium, and others, could also be used, such as in the form of infusible oxides or phosphates, and that catalysts could either be formed into nets (screens), or deposited on thermally-resistant solid supports such as silica or alumina.

In subsequent development work, platinum-containing catalysts have been selected due to their efficacy and to the heat resistance of the metal even in gauze or net form. For example, a platinum-rhodium alloy can be used as the catalyst, which can be in the form of a metal gauze or screen such as a woven or knitted gauze sheet, or can be disposed on a support structure. In an example, the woven or knitted gauze sheet can form a mesh-like structure having a size from 20-80 mesh, e.g., having openings with a size from about 0.18 mm to about 0.85 mm. A catalyst can comprise from about 85 wt% to about 95 wt% Pt and from about 5 wt% to about 15 wt% Rh, such as about 85/5 Pt/Rh, 90/10, or about 95/5 Pt/Rh. A platinum-rhodium catalyst can also comprise small amounts of metal impurities, such as iron (Fe), palladium (Pd), iridium (Ir), ruthenium (Ru), and other metals. The impurity metals can be present in trace amounts, such as about 10 ppm or less.

A broad spectrum of possible embodiments of the Andrussow method is described in German Patent 549,055. In one example, a catalyst comprising a plurality of fine-mesh gauzes of Pt with 10 wt% rhodium disposed in series is used at temperatures of about 800 to 2500° C, about 1000 to 1500° C, or about 980 to 1050° C. For example, the catalyst can be a commercially-available catalyst, such as a Pt-Rh catalyst gauze available from Johnson Matthey Plc, London, UK, or a Pt-Rh catalyst gauze available from Heraeus Precious Metals GmbH & Co., Hanau, Germany.

An air Andrussow process uses air as the oxygen-containing feed stream, having approximately 20.95 mol% oxygen. An oxygen-enriched Andrussow process uses an oxygen-containing feed stream formed having a higher oxygen content than is found in ambient air, e.g., about 21 mol% oxygen to about 26%, 27%, 28%, 29%, or to about 30 mol% oxygen, such as about 22 mol% oxygen, 23%, 24%, or about 25 mol% oxygen.

An oxygen Andrussow process uses an oxygen-containing feed stream having about 26 mol% oxygen, 27%, 28%, 29%, or about 30 mol% oxygen to about 100 mol% oxygen. In some embodiments, an oxygen Andrussow process can use an oxygen-containing feed stream having about 35 mol% oxygen, 40%, 45%, 50%, 55%, 60%, 65%, 70%, 75%, 80%, 85%, 90%, 95%, or about 100 mol% oxygen.

In various examples, the oxygen-containing feed stream in an oxygen-enriched Andrussow process, or in an oxygen Andrussow process with an oxygen-containing feed stream having less than 100 mol% oxygen, can be generated by at least one of mixing air with oxygen, by mixing oxygen with any suitable gas or combination of gases, or by removing one or more gases from an oxygen-containing gas composition such as air.

There are some advantages to the use of an oxygen-enriched or oxygen Andrussow process instead of an air Andrussow process. Advantageously, by using an oxygen-enriched or oxygen Andrussow process, a greater proportion of hydrogen can be generated in the effluent stream than in an air Andrussow process. Also, in an oxygen-enriched or oxygen Andrussow process, less non-reactive or impurity materials are present in the oxygen-containing feed stream, which reduces heating costs of the desired reagents prior to adding to a reactor, resulting in less wasted energy. The equipment for production of an equivalent amount of HCN can also be more compact (smaller) for an oxygen-enriched or oxygen Andrussow process than for an air Andrussow process.

However, an oxygen-enriched Andrussow process or an oxygen Andrussow process can have a number of problems that are not experienced in an air Andrussow process. Moreover, as the oxygen concentration of the feed gas increases, the problems are amplified. For example, the reagents in an oxygen-enriched or oxygen Andrussow process are less diluted by other gases, such as inert gases. Therefore, an oxygen-enriched or oxygen Andrussow process tends to proceed in a more concentrated fashion than an air Andrussow process. As such, an oxygen-enriched or oxygen Andrussow process tends to generate a higher concentration of all products, including byproducts. Hence, the reactor and associated equipment for an oxygen-enriched or oxygen Andrussow process is more susceptible to the build-up of impurities in the system that can more easily be flushed out of the equipment employed in an air Andrussow process. The greater rate of byproduct build-up can lead to increased rates of corrosion as well as more frequent shut down and maintenance of various parts of the process. Equipment that can be significantly affected by byproduct build-up, corrosion and related problems include, for example, the reactor(s), the ammonia recovery system(s), and the HCN recovery system(s).

Because the reagents in an oxygen-enriched or oxygen Andrussow process are more concentrated, the reaction can be more sensitive to variations in concentration of reagents than in an air Andrussow process. Local variations in the concentration of reagents as the reagents travel past the catalyst can cause temperature variations in the catalyst bed, such as hot spots, which can reduce the life of the catalyst as compared to an air Andrussow process, and can also cause safety risks such as ignition or detonation. Also, heat transfer from the effluent of an oxygen-enriched or oxygen Andrussow process can be more difficult than in an air Andrussow process, in part because the effluent is more concentrated than observed for an air Andrussow process and cooling such a concentrated effluent to the point of condensation can increase the likelihood of side product formation that might not be observed if the effluent was more dilute.

In addition, variations in the concentration or flow rate of reagents in an oxygen-enriched or oxygen Andrussow process can cause larger differences in the overall efficiency of the process as compared to an air Andrussow process. In an oxygen-enriched or oxygen Andrussow process, the risk of combustion or detonation of the gas mixture is greatly enhanced, resulting in safety protocols in equipment design and operation that are not generally used or needed in an air Andrussow process. An oxygen-enriched or oxygen Andrussow process is more sensitive to changes in BTU value of the feed gas; therefore, small variations in the composition of the feed stream can cause greater temperature fluctuations in the reactor than would be observed for similar feed stream compositions in an air Andrussow process. The present invention can provide solutions to these problems.

It has been unexpectedly discovered by the inventors herein that the C₂+ content, i.e., the relative amount of ethane, ethylene, propane, propylene and higher hydrocarbons in a natural gas feed, is significant in an oxygen Andrussow process in terms of reducing the level of detrimental organonitrile byproducts. By an "oxygen Andrussow process" is meant a process for the production of hydrogen cyanide from hydrocarbons, ammonia, and oxygen, wherein the oxygen is substantially pure and undiluted with nitrogen (e.g., as in air) or other inert diluent gases.

The problem to be solved is that in an oxygen Andrussow process, the C₂+ components readily convert to undesired side products including organonitrile impurities such acrylonitrile, acetonitrile, propionitrile, and other compounds. This problem is, unexpectedly, not similarly observed in an air Andrussow process as defined above. When an oxidizer gas contains increasing levels of oxygen, e.g., and enriched-air Andrussow process, and even more so in an oxygen Andrussow process, the proportions of deleterious organonitrile impurities, e.g., acrylonitrile, have surprisingly been found to increase dependent upon the levels of C2+ hydrocarbon components in the reaction mixture supplied to the catalyst in the HCN synthesis converter(s). The present invention provides solutions to the problem of organonitrile impurity generation through selection of hydrocarbon feedstocks having reduced levels of higher hydrocarbons relative to methane.

In an Andrussow process that uses air it is believed that the presence of the nitrogen diluent reduces the sensitivity of the reaction to temperature with respect to generation of organonitrile impurities; a wider range of temperatures in the reaction zone can be tolerated without generation of the organonitrile impurities. Polymeric impurities are not formed to the same degree when methane with higher impurity levels is employed in the air Andrussow process. In the oxygen Andrussow process, it has been unexpectedly discovered that the presence of C₂+ hydrocarbons as methane contaminants causes formation of these undesirable impurities. Polymeric impurities can include polymers of hydrogen cyanide itself as well as polymers derived from organonitrile impurities, such as polymerized acrylonitrile.

While not wishing to be bound by theory, the inventors herein believe that, in the Andrussow process using pure oxygen, variations can occur in localized zones in the vicinity of the platinum sponge catalyst that can result in impurity formation. This can make process condition optimization difficult, resulting in lower HCN yield, higher impurity levels, and process interruptions. Organonitrile compounds, mainly acetonitrile, acrylonitrile, and propionitrile, end up in the HCN stripper or enricher columns where they become trapped and must periodically be purged, or column performance suffers and the possibility for HCN polymerization increases.

Organonitrile impurities can include alkenylnitrile species such as acrylonitrile, containing a reactive double bond, in addition to the alkylnitrile species such as acetonitrile and propionitrile. Alkenylnitriles can themselves polymerize, particularly under alkaline conditions, and the reaction products are not water-soluble. Such polymers can contaminate equipment, requiring down-time for cleaning procedures. Alkylnitriles can build up in various places in the process equipment, where their presence is undesirable. The blocking or plugging of lines by the polymers can also present a serious safety hazard, as overpressures (e.g., of HCN in gaseous form) can develop, which can result in blowouts of gaskets and the like, and release of HCN into the environment surrounding the plugged equipment.

Normal operating condition for an oxygen Andrussow process employ molar ratios of methane/ammonia/oxygen of about 1/1.1/0.84, corresponding to percentage concentrations on a molar basis of about 34%, 37.4%, and 28.6%. The main process variables are hydrocarbon feed composition (pure CH₄ or mixtures of CH₄ with other hydrocarbons), temperature, and catalyst contact time.

As is known in the art, the purification of methane (i.e., diminishment of relative proportions of C₂+ hydrocarbons in methane) can be accomplished by fractional distillation of the methane, which has a lower boiling point than do the higher hydrocarbons.

### Example 1

Example 1 details the results of observations taken during a period of operation of an oxygen Andrussow reactor, during which a change in hydrocarbon composition was seen to result in process temperature and product variation.

A 102 mm (4 inch) internal diameter stainless steel reactor with ceramic insulation lining inside is used for pilot scale test. Forty sheets of 90 wt% Pt/10 wt% Rh 40 mesh gauze from Johnson Matthey (USA) are loaded as catalyst bed. Perforated alumina tile is used for catalyst sheet support. The total flow rate is set at 71.7 standard cubic meters per hour (2532 SCFH [standard cubic foot per hour]). In a simulated manufacturing sequence, three reactors are used in an oxygen Andrussow reaction facility to generate hydrogen cyanide from a reaction mixture of about 34 mol% methane, about 37 mol% ammonia, and about 27 mol% oxygen in the presence of the platinum catalyst. The gaseous product stream from the reactors contains about 17 mol% hydrogen cyanide, about 6 mol% unreacted ammonia, about 35 mol% hydrogen, about 6 mol% CO, and about 34 mol% H₂O, with an approximately 82% overall yield of hydrogen cyanide based on NH₃ reacted (mole based). In the continuous oxygen Andrussow reactor, over a 22 hour period of operation, a feed of methane/ammonia/oxygen in molar ratios of about 1/1.1/0.84 was supplied to a platinum catalyst, and operating parameters were recorded. Among the variables recorded were reaction zone temperature, wt% content of ethane and propane in the methane feedstock, carbon dioxide levels in the product hydrogen cyanide, ammonia % conversion, and % yield of cyanide based on ammonia.

Initial operating conditions included a C2+ hydrocarbon content of less than 2 wt%, and a reaction zone temperature in the range of about 1090-1100°C. Under these operating conditions, the values were noted. After about 12 hours of stable operation, a significant increase in the ethane and propane levels of the methane feedstock was observed. The ethane level rose about 1.7 wt% and the propane level about 0.3 wt%. Correlated with the change in C₂+ hydrocarbon impurity level, the reaction zone temperature rose and became more variable, ranging between about 1125 and 1165°C; carbon dioxide output increased about 0.5% absolute, the ammonia conversion dropped by about 4% absolute and percent HCN yield dropped by about 4% absolute. By "% absolute" is meant a percentage change on the same scale as used for the initial measurement, not a percentage of the initial measurement. These increases and decreases were contemporaneous with the alteration in hydrocarbon feed composition. No other process variables were believed to have been altered other than the composition of the hydrocarbon feedstock with respect to C₂+ hydrocarbons.

Figure 1, below, is a chart showing results obtained from the process described in Example 1. Values for % composition are given as volume % composition. The oxygen Andrussow process was carried out using two differing hydrocarbon feedstock compositions. Switching from more pure to less pure methane feedstock at time 0 hours results in an increase in the relative quantities formed of the impurities.

The data are summarized in Table 1, below. Values are given relative to a base value determined before 0 hours while operating with methane of a higher purity, as indicated.

**Table 1: Effect of C2+ Hydrocarbon Content on Reaction Zone Temperature and HCN Yield**

| **Feed composition Volume %** | **Change After Switching from More Pure to Less Pure Feedstock** |
|---|---|
| % C₂H₅ | 1.7% |
| % C₃H₈ | 0.3% |
| % CO₂ | 0.7% |
| Reaction Zone. Temp (°C) | +48° |
| Avg Conversion (%) | -4% |
| Avg. HCN yield (%) | -4% |

### Example 2

A 102 mm (4 inch) internal diameter stainless steel reactor with ceramic insulation lining inside is used for pilot scale test. Forty sheets of 90 wt% Pt/10 wt% Rh 40 mesh gauze from Johnson Matthey (USA) are loaded as catalyst bed. Perforated alumina tile is used for catalyst sheet support. The total flow rate is set at 71.7 standard cubic meters per hour (2532 SCFH [standard cubic foot per hour]). In a simulated manufacturing sequence, three reactors are used in an oxygen Andrussow reaction facility to generate hydrogen cyanide from a reaction mixture of about 34 mol% methane, about 37 mol% ammonia, and about 27 mol% oxygen in the presence of the platinum catalyst. The gaseous product stream from the reactors contains about 17 mol% hydrogen cyanide, about 6 mol% unreacted ammonia, about 35 mol% hydrogen, about 6 mol% CO, and about 34 mol% H₂O, with an approximately 82% overall yield of hydrogen cyanide based on NH₃ reacted (mole based). In the continuous oxygen Andrussow process carried out over a period of operation, a feed of methane/ammonia/oxygen in molar ratios of about 1/1.1/0.84 is supplied to a platinum catalyst, and operating parameters are recorded. Among the variables recorded are reaction zone temperature, wt% content of impurities ethane and propane in the methane feedstock, carbon dioxide levels in the product hydrogen cyanide, ammonia % conversion, % yield of cyanide based on ammonia, and wt% of each of the organonitrile impurities acetonitrile, propionitrile, and acrylonitrile. A hydrocarbon feed containing 99 wt% methane is initially used, and operating temperature, ammonia % conversion, carbon dioxide levels, and HCN % yield are observed to be stable. At a point in time, after stable process operation, the methane purity level is decreased to 95 wt%, the ethane and propane levels increasing correspondingly. Correlated in time with the decrease in methane purity, an increase in reaction zone temperature, and increases in organonitrile impurity levels in the HCN product stream, are observed.

### Example 3

A 102 mm (4 inch) internal diameter stainless steel reactor with ceramic insulation lining inside is used for pilot scale test. Forty sheets of 90 wt% Pt/10 wt% Rh 40 mesh gauze from Johnson Matthey (USA) are loaded as catalyst bed. Perforated alumina tile is used for catalyst sheet support. The total flow rate is set at 71.7 standard cubic meters per hour (2532 SCFH [standard cubic foot per hour]). In a simulated manufacturing sequence, three reactors are used in an Oxygen Andrussow reaction facility to generate hydrogen cyanide from a reaction mixture of about 34 mol% methane, about 37 mol% ammonia, and about 27 mol% oxygen in the presence of the platinum catalyst. The gaseous product stream from the reactors contains about 17 mol% hydrogen cyanide, about 6 mol% unreacted ammonia, about 35 mol% hydrogen, about 6 mol% CO, and about 34 mol% H₂O, with an approximately 82% overall yield of hydrogen cyanide based on NH₃ reacted (mole based). In the continuous oxygen Andrussow process carried out over a period of operation, a feed of methane/ammonia/oxygen in molar ratios of about 1/1.1/0.84 is supplied to a platinum catalyst, and operating parameters are recorded. Among the variables recorded are reaction zone temperature, and wt% content of impurities ethane and propane in the methane feedstock. A methane purity level of 99 wt% is maintained. After a period of time of stable process operation has elapsed, an amount of polymer buildup in HCN process equipment is determined. The process is then operated for an equivalent period of time using a methane purity level of 95 wt%, and the amount of polymer buildup in the HCN process equipment is again determined. It is observed that a greater quantity of polymer buildup is observed using the methane of lower purity.

### Example 4

A 102 mm (4 inch) internal diameter stainless steel reactor with ceramic insulation lining inside is used for pilot scale test. Forty sheets of 90 wt% Pt/10 wt% Rh 40 mesh gauze from Johnson Matthey (USA) are loaded as catalyst bed. Perforated alumina tile is used for catalyst sheet support. The total flow rate is set at 71.7 standard cubic meters per hour (2532 SCFH [standard cubic foot per hour]). In a simulated manufacturing sequence, three reactors are used in an oxygen Andrussow reaction facility to generate hydrogen cyanide from a reaction mixture of about 34 mol% methane, about 37 mol% ammonia, and about 27 mol% oxygen in the presence of the platinum catalyst. The gaseous product stream from the reactors contains about 17 mol% hydrogen cyanide, about 6 mol% unreacted ammonia, about 35 mol% hydrogen, about 6 mol% CO, and about 34 mol% H₂O, with an approximately 82% overall yield of hydrogen cyanide based on NH₃ reacted (mole based). In the continuous oxygen Andrussow process carried out over a period of operation, a feed of methane/ammonia/oxygen in molar ratios of about 1/1.1/0.84 is supplied to a platinum catalyst. A methane purity of about 99 wt% is used. The degree of polymer buildup in the HCN enricher column bottom trays is monitored. Within 2-3 months of continuous operation, the polymer buildup is not sufficient to cause deleterious effects on HCN enricher column performance. Continuous operation is maintained up through the 2 year regularly scheduled maintenance cleaning mandated by Good Manufacturing Practices.

### Comparative Example 1

A 102 mm (4 inch) internal diameter stainless steel reactor with ceramic insulation lining inside is used for pilot scale test. Forty sheets of 90 wt% Pt/10 wt% Rh 40 mesh gauze from Johnson Matthey (USA) are loaded as catalyst bed. Perforated alumina tile is used for catalyst sheet support. The total flow rate is set at 71.7 standard cubic meters per hour (2532 SCFH [standard cubic foot per hour]). In a simulated manufacturing sequence, three reactors are used in an oxygen Andrussow reaction facility to generate hydrogen cyanide from a reaction mixture of about 34 mol% methane, about 37 mol% ammonia, and about 27 mol% oxygen in the presence of the platinum catalyst. The gaseous product stream from the reactors contains about 17 mol% hydrogen cyanide, about 6 mol% unreacted ammonia, about 35 mol% hydrogen, about 6 mol% CO, and about 34 mol% H₂O with an approximately 82% overall yield of hydrogen cyanide based on NH₃ reacted (mole based). In the continuous oxygen Andrussow process carried out over a period of operation, a feed of methane/ammonia/oxygen in molar ratios of about 1/1.110.84 is supplied to a platinum catalyst. A methane purity of about 95 wt% is used. The degree of polymer buildup in the HCN enricher column bottom trays is monitored. Within 2-3 months of continuous operation, the polymer buildup is sufficient to cause deleterious effects on HCN enricher column performance, and the equipment is shut down for cleaning. The polymeric tars and solid present require extensive and time-consuming cleaning operations to restore the equipment to operability.

Thus, the presence of C₂+ hydrocarbons in the oxygen Andrussow process can be seen to increase reaction zone temperature and decrease HCN product yield (and % conversion of NH₃). It is believed by the inventors that these elevated reaction zone temperatures can at least in part be responsible for the increased production of organonitrile impurities. The presence of the intact carbon fragment in the reaction hydrocarbon feed (e.g., C₂ for acetonitrile, C₃ for acrylonitrile and propionitrile, C₄ for methacrylonitrile, etc.) may also contribute to the formation of these organonitrile impurities. Thus, the effect of using methane feedstocks with reduced levels of C₂+ hydrocarbons can correspondingly reduce the amount of organonitrile production in the converter bed reaction zone by multiple mechanisms; including but not limited to decreasing reaction zone temperature, greater uniformity of reaction zone temperature, and decreased availability of C₂+ precursor materials in the reaction zone.

Accordingly, the invention provides a method of HCN production by Andrussow ammoxidation of an alkane mixture with ammonia and oxygen, in the presence of a platinum catalyst, comprising use of an alkane mixture comprising methane of at least about 95 wt% purity, or of at least about 99 wt% purity, or of at least about 99.9 wt% purity; wherein the HCN product contains a lesser content of one or more organonitrile impurities than does an HCN product obtained from a comparable ammoxidation process wherein an alkane mixture of lower methane purity is used. It is preferred to use methane of the higher levels of purity, believing that a corresponding decrease in the amount of organonitrile impurity is thereby achieved.

More specifically, reducing the levels of ethane, propane, ethylene, and propylene, in the methane feedstock can reduce organonitrile impurity production in the oxygen Andrussow process. Thus, the invention provides a method of HCN production by Andrussow ammoxidation of an alkane mixture with ammonia and oxygen, in the presence of a platinum catalyst, wherein the improvement comprises use of an alkane source comprising no more than about 2 wt%, or no more than about 1 wt%, or no more than about 0.1 wt%, of ethane, or of propane, or of alkene analogs thereof, or of a mixture thereof; wherein the HCN product contains a lesser content of organonitrile impurity than does an HCN product obtained when an alkane source containing higher a higher content of ethane, propane, or their alkene analogs thereof, or a mixture thereof, undergoes a comparable ammoxidation. It is believed that the organonitrile impurity level is proportional to the relative amount of C₂+ hydrocarbons present in the feedstock; for example, the invention provides a method of HCN production wherein the HCN product comprises as an impurity less than 2 wt%, or less than 1 wt%, or less than 0.1 wt%, of one or more organonitrile impurities the method comprising contacting ammonia, oxygen, and an alkane mixture in the presence of a platinum catalyst, under conditions suitable to carry out an Andrussow ammoxidation reaction, wherein the alkane mixture comprises less than about 2 wt%, or less than 1 wt%, or less than 0.1 wt%, of alkanes or their analogous alkenes, other than methane. Again, the organonitrile impurity can comprise acrylonitrile, acetonitrile, or propionitrile, or a mixture thereof.

By practice of a method of the invention, the benefits achieved include reduced downtime for removal of impurities and polymers resulting from the presence of the impurities, elimination or reduction of processing steps previously required by the presence of the organonitrile impurities, and improved yield of HCN. Also, the HCN product composition purity can be improved, the product containing less than about 2 wt%, or less than about 1 wt%, or less than about 0.1 wt%, of one or more organonitriles. The impurities eliminated can comprise acrylonitrile, acetonitrile, or propionitrile, or a mixture thereof. The absence of these impurities in the product stream can also result in a lesser degree of formation of polymers, such as polymerized hydrogen cyanide, and polymerized alkenenitriles such as acrylonitrile. Such polymers can contaminate surfaces, occlude transfer lines, and increase equipment downtime for cleaning.

Accordingly, the invention can provide a method of reducing equipment downtime in an oxygen Andrussow continuous process for HCN production, comprising contacting ammonia, oxygen, and an alkane mixture in the presence of a platinum catalyst, under conditions suitable to carry out an Andrussow ammoxidation reaction, wherein the alkane mixture comprises less than about 2 wt% of alkanes or their analogous alkenes, other than methane, such that process equipment requires less frequent cleaning to remove polymers of acrylonitrile and hydrogen cyanide therefrom than when an alkane mixture comprising greater than about 2 wt% alkanes or their analogous alkenes, other than methane, is used in the oxygen Andrussow process. Or, the alkane mixture can comprise less than about 1 wt% of alkanes or their analogous alkenes, other than methane. Or, the alkane mixture can comprise less than about 0.1 wt% of alkanes or their analogous alkenes, other than methane. Operating under any of the above conditions, the process equipment can comprise an HCN enricher column, from which polymeric residues need to be cleaned less frequently than when using an alkane mixture of a higher C2+ content. In contrast, using a method wherein an alkane mixture comprising greater than about 2 wt% alkanes or their analogous alkenes, other than methane, is used in the oxygen Andrussow process, the process equipment comprising an HCN enricher column can require cleaning every 2-3 months. Such downtime for cleaning is disruptive and expensive, but can be mitigated by using a method of the present invention.

The terms and expressions which have been employed are used as terms of description and not of limitation, and there is no intention that in the use of such terms and expressions of excluding any equivalents of the features shown and described or portions thereof, but it is recognized that various modifications are possible within the scope of the invention claimed. Thus, it should be understood that although the present invention has been specifically disclosed by preferred variants and optional features, modification and variation of the concepts herein disclosed may be resorted to by those skilled in the art.

## Claims

1. A method of HCN production in an oxygen Andrussow process by Andrussow ammoxidation of an alkane mixture with ammonia and an oxygen containing feed stream having about at least 26 mol% oxygen, in the presence of a platinum catalyst, comprising:
use of an alkane mixture comprising methane of at least 99 wt% purity.

2. The method of claim 1, wherein the methane purity in the alkane mixture is at least 99.9 wt%.

3. A method of HCN production in an oxygen Andrussow process wherein the product HCN comprises as an impurity less than 2 wt%, or less than 1 wt%, or less than 0.1 wt%, of one or more organonitrile impurities, the method comprising:
contacting ammonia, an oxygen containing feed stream having about at least 26 mol% oxygen, and an alkane mixture in the presence of a platinum catalyst, under conditions suitable to carry out an Andrussow ammoxidation reaction, wherein the alkane mixture comprises less than 2 wt%, of alkanes or their analogous alkenes, other than methane.

4. The method of claim 3, wherein the alkane mixture comprises less than 1 wt% of alkanes or their analogous alkenes, other than methane.

5. The method of claim 3, wherein the alkane mixture comprises less than 0.1 wt% of alkanes or their analogous alkenes, other than methane.

6. The method of claim 3, wherein the organonitrile impurities comprise acrylonitrile, acetonitrile, or propionitrile, or a mixture thereof.

## Patentansprüche

1. Verfahren zur Herstellung von HCN in einem Sauerstoff-Andrussow-Verfahren durch Andrussow-Ammoxidation eines Alkangemischs mit Ammoniak und einem sauerstoffhaltigen Einsatzstrom mit etwa mindestens 26 Mol-% Sauerstoff in Gegenwart eines Platinkatalysators, bei dem:
ein Alkangemisch, das Methan mit einer Reinheit von mindestens 99 Gew.-% umfasst, verwendet wird.

2. Verfahren nach Anspruch 1, bei dem die Methanreinheit in dem Alkangemisch mindestens 99,9 Gew.-% beträgt.

3. Verfahren zur Herstellung von HCN in einem Sauerstoff-Andrussow-Verfahren, wobei das anfallende HCN als eine Verunreinigung weniger als 2 Gew.-% oder weniger als 1 Gew.-% oder weniger als 0,1 Gew.-% einer oder mehrerer Organonitril-Verunreinigungen umfasst, bei dem:
Ammoniak, ein sauerstoffhaltiger Einsatzstrom mit etwa mindestens 26 Mol-% Sauerstoff und ein Alkangemisch in Gegenwart eines Platinkatalysators unter zur Durchführung einer Andrussow-Ammoxidationsreaktion geeigneten Bedingungen in Berührung gebracht werden, wobei das Alkangemisch weniger als 2 Gew.-% Alkane oder deren analoge Alkene, die von Methan verschieden sind, umfasst.

4. Verfahren nach Anspruch 3, bei dem das Alkangemisch weniger als 1 Gew.-% Alkane oder deren analoge Alkene, die von Methan verschieden sind, umfasst.

5. Verfahren nach Anspruch 3, bei dem das Alkangemisch weniger als 0,1 Gew.-% Alkane oder deren analoge Alkene, die von Methan verschieden sind, umfasst.

6. Verfahren nach Anspruch 3, bei dem die Organonitril-Verunreinigungen Acrylnitril, Acetonitril oder Propionitril oder ein Gemisch davon umfassen.

## Revendications

1. Procédé de production d'HCN dans un procédé Andrussow à l'oxygène par ammoxydation d'Andrussow d'un mélange d'alcanes avec de l'ammoniac et un flux d'alimentation contenant de l'oxygène ayant environ au moins 26 % en mole d'oxygène, en présence d'un catalyseur au platine, comprenant :
l'utilisation d'un mélange d'alcanes comprenant du méthane de pureté d'au moins 99 % en poids.

2. Procédé selon la revendication 1, dans lequel la pureté du méthane dans le mélange d'alcanes est d'au moins 99,9 % en poids.

3. Procédé de production d'HCN dans un procédé Andrussow à l'oxygène dans lequel le produit HCN comprend en tant qu'impureté moins de 2 % en poids, ou moins de 1 % en poids, ou moins de 0,1 % en poids, d'une ou plusieurs impuretés organonitriles, le procédé comprenant :
la mise en contact d'ammoniac, d'un flux d'alimentation contenant de l'oxygène ayant environ au moins 26 % en mole d'oxygène et d'un mélange d'alcanes en présence d'un catalyseur au platine, dans des conditions appropriées pour effectuer une réaction d'ammoxydation d'Andrussow, dans lequel le mélange d'alcanes comprend moins de 2 % en poids d'alcanes ou de leurs alcènes analogues, autres que le méthane.

4. Procédé selon la revendication 3, dans lequel le mélange d'alcanes comprend moins de 1 % en poids d'alcanes ou de leurs alcènes analogues, autres que le méthane.

5. Procédé selon la revendication 3, dans lequel le mélange d'alcanes comprend moins de 0,1 % en poids d'alcanes ou de leurs alcènes analogues, autres que le méthane.

6. Procédé selon la revendication 3, dans lequel les impuretés organonitriles comprennent l'acrylonitrile, l'acétonitrile ou le propionitrile ou un mélange de ceux-ci.
